(19) Europäisches Patentamt / European Patent Office / Office européen des brevets

(11) **EP 4 304 102 A1**

(12) **EUROPEAN PATENT APPLICATION**
published in accordance with Art. 153(4) EPC

(43) Date of publication:
**10.01.2024 Bulletin 2024/02**

(21) Application number: **22778703.3**

(22) Date of filing: **23.03.2022**

(51) International Patent Classification (IPC):
**H04B 7/04** (2017.01) **H04B 7/14** (2006.01)
**H04W 24/02** (2009.01)

(52) Cooperative Patent Classification (CPC):
**H04B 7/04; H04B 7/14; H04B 7/155; H04W 24/02**

(86) International application number:
**PCT/CN2022/082574**

(87) International publication number:
**WO 2022/206520 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.04.2021 CN 202110363653**

(71) Applicant: **Huawei Technologies Co., Ltd.
Shenzhen, Guangdong 518129 (CN)**

(72) Inventors:
• **LIU, Fengwei
Shenzhen, Guangdong 518129 (CN)**
• **MA, Chuanhui
Shenzhen, Guangdong 518129 (CN)**

(74) Representative: **Maiwald GmbH
Engineering
Elisenhof
Elisenstrasse 3
80335 München (DE)**

(54) **SIGNAL FORWARDING METHOD AND APPARATUS**

(57) Embodiments of this application provide a signal forwarding method and apparatus, and relate to the field of wireless communication technologies, to improve a coverage gain and reduce a forwarding delay. In this method, a relay node may combine N signals into one signal. Each signal may be a signal obtained by performing frequency shift on a signal received by a receive channel corresponding to each signal, or each signal may be a signal obtained without performing frequency shift on a signal received by a receive channel corresponding to each signal. At least one signal included in the N signals is a signal obtained by performing frequency shift on a signal received by a receive channel corresponding to the at least one signal. The relay node may send the combined one signal. In the foregoing solution, the relay node may receive a plurality of signals, combine the plurality of signals, and then send a combined signal, to implement parallel receiving of a plurality of beams, so that the beams have larger angle coverage at one moment, and a beam gain can be obtained. Therefore, an uplink forwarding gain of the relay node can be significantly improved.

FIG. 5

# Description

## CROSS-REFERENCE TO RELATED APPLICATIONS

This application claims priority to Chinese Patent Application No. 202110363653.6, filed with the China National Intellectual Property Administration on April 2, 2021, and entitled "SIGNAL FORWARDING METHOD AND APPARATUS", which is incorporated herein by reference in its entirety.

## TECHNICAL FIELD

This application relates to the field of wireless communication technologies, and in particular, to a signal forwarding method and apparatus.

## BACKGROUND

In wireless communication and mobile communication, a base station and user equipment (user equipment, UE) increase a transmission bandwidth to meet a requirement of a user for an increasing transmission rate. To obtain a larger transmission bandwidth, a mobile communication system uses spectrum resources of a higher carrier frequency. Although a high frequency band can provide more abundant spectrum resources, an electromagnetic wave of a high frequency band has disadvantages such as large propagation attenuation and a weak diffraction capability. Consequently, it is more difficult for a cellular communication system deployed on a high frequency band to implement full coverage of an area, that is, a coverage hole may occur. A typical coverage hole includes an area blocked by a building, an indoor area, or the like.

A relay node may be configured to resolve a coverage problem in a wireless communication system. A typical relay system includes an amplify-and-forward (amplify-and-forward, AF) relay and a decode-and-forward (decode-and-forward, DF) relay.

The AF relay directly performs forwarding after receiving a downlink signal sent by the base station, or the AF relay performs forwarding after receiving an uplink signal sent by the UE. A signal received by the AF relay includes noise and interference. The AF relay amplifies the noise and interference while amplifying the signal, and consequently signal forwarding quality is affected. The AF relay has advantages of a low forwarding delay and low costs. The AF relay is also referred to as a repeater. Currently, a fixed beam or an omnidirectional beam is generally used on an access side of the repeater. Omnidirectional amplification has a disadvantage of an insufficient amplification gain, and an area that can be covered by the fixed beam is small. Therefore, gains currently provided by the repeater cannot meet requirements of some extreme coverage-limited scenarios.

The DF relay performs decoding after receiving the downlink signal sent by the base station or the uplink signal sent by the UE, and then re-encodes the signal for forwarding. Through decoding and re-encoding, the DF relay may eliminate or reduce interference and noise in a transmission process, that is, avoid amplification of the interference and noise. However, the DF relay has disadvantages of a long forwarding delay and high costs.

## SUMMARY

Embodiments of this application provide a signal forwarding method and apparatus, to improve a coverage gain and reduce a forwarding delay.

According to a first aspect, a signal forwarding method is provided. The method may be performed by a relay node or a chip with a similar function of the relay node. In this method, the relay node may combine N signals into one signal. The N signals correspond to N receive channels, each signal may be a signal obtained by performing frequency shift on a signal received by a receive channel corresponding to each signal, or each signal may be a signal obtained without performing frequency shift on a signal received by a receive channel corresponding to each signal. At least one signal included in the N signals is a signal obtained by performing frequency shift on a signal received by a receive channel corresponding to the at least one signal. Herein, N is greater than or equal to 2. The relay node may send the combined one signal.

In the foregoing solution, the relay node may receive a plurality of signals, combine the plurality of signals, and then send a combined signal, to implement parallel receiving of a plurality of beams, so that the beams have larger angle coverage at one moment, and a beam gain can be obtained. Therefore, an uplink forwarding gain of the relay node can be significantly improved. In addition, because an operation like beam scanning may not need to be performed during receiving, and re-decoding and re-coding may not need to be performed during forwarding, a forwarding delay is reduced.

In a possible implementation, at least two signal of the N signals may have different frequency shift amounts. Optionally, the at least two signals having different frequency shift amounts may be orthogonal after frequency shift.

Based on the foregoing solution, the relay node may combine signals having different frequency shift amounts into one signal and forward the signal, to implement parallel receiving of the plurality of beams.

In a possible implementation, a frequency shift amount corresponding to each receive channel in the N receive channels may vary, and a frequency shift amount of a signal received by one receive channel may remain unchanged. The at least one signal of the N signals is a signal obtained by performing, based on a frequency shift amount corresponding to the receive channel corresponding to the at least one signal, frequency shift on the signal received by the receive channel corresponding to the at least one signal. Optionally, the frequency shift amount may be equal to 0, or may be greater than 0, or may be less than 0.

Based on the foregoing solution, a frequency shift amount of each receive channel of the relay node may vary, and the relay node may perform frequency shift on a received signal based on a frequency shift amount of a receive channel corresponding to the received signal. This can reduce complexity.

In a possible implementation, the N signals may come from N groups. Each group may include K signals, where K may be greater than or equal to 1. The N groups are obtained by grouping a plurality of signals received by the N receive channels. Each signal in the N signals is a signal obtained by performing frequency shift on each signal in the plurality of signals, or each signal in the N signals is one of the plurality of signals.

Based on the foregoing solution, the relay node may group received signals, and may combine some signals in each group into one signal.

In a possible implementation, K is a quantity of transmit channels of the relay node.

Based on the foregoing solution, when the relay node groups the received signals, a quantity of signals in each group may be the same as the quantity of transmit channels of the relay node. Therefore, the signals in the N groups may be combined into the K signals, and the K signals are sent through the K transmit channels. This can reduce complexity of the relay node.

In a possible implementation, different groups in the N groups may correspond to different frequency shift amounts, and signals in one group have a same frequency shift amount. Optionally, the frequency shift amount may be equal to 0, or may be greater than 0, or may be less than 0.

Based on the foregoing solution, after grouping the signals, the relay node may perform frequency shift based on different groups, different groups may have different frequency shift amounts, and signals in a group may have a same frequency shift amount. This can reduce complexity of the relay node.

In a possible implementation, the relay node may receive one or more pieces of first indication information from a network device. One piece of first indication information may indicate a frequency domain position to which a signal corresponding to a receive channel of a relay node is mapped. A frequency domain position of a frequency-shifted signal is determined based on the first indication information.

Based on the foregoing solution, the relay node may map a received signal to a corresponding frequency shift position based on the first indication information of the network device, to implement frequency shift and combination, so that the relay node and the network device can align frequency domain positions of signals, to implement signal forwarding.

In a possible implementation, the relay node may receive the N frequency shift modes from the network device. One frequency shift mode may correspond to one receive channel. One frequency shift mode may indicate one frequency shift value, and the at least one signal in the N signals is a signal obtained by performing, based on a frequency shift value indicated by a frequency shift mode corresponding to the receive channel corresponding to the at least one signal, frequency shift on the signal received by the receive channel corresponding to the at least one signal.

Based on the foregoing solution, the relay node may perform frequency shift on a received signal based on a frequency shift mode indicated by the network device, so that the relay node and the network device can align frequency domain positions of signals, to implement signal forwarding.

In a possible implementation, the relay node may receive one or more pieces of second indication information from the network device. One piece of first indication information may indicate a transmit channel to which a signal corresponding to one receive channel of the relay node is mapped. The relay node may map the N signals to one transmit channel based on second indication information respectively corresponding to the N signals.

Based on the foregoing solution, the relay node may separately map frequency-shifted signals to corresponding transmit channels based on the second indication information of the network device, to implement signal combination.

In a possible implementation, the relay node may send a quantity of receive channels, the quantity of transmit channels, and a maximum quantity of supported frequencies to the network device.

Based on the foregoing solution, the relay node may report the foregoing information to the network device, and the network device may indicate the first indication information or the frequency shift mode to the relay node based on the information.

In a possible implementation, the relay node may send a supported mapping relationship between a receive channel and a transmit channel to the network device.

Based on the foregoing solution, the network device may indicate the second indication information to the relay node based on the information reported by the relay node.

In a possible implementation, the relay node may amplify the N signals, or the relay node may amplify the one signal.

Based on the foregoing solution, the relay node may amplify signals before signal combination, or may amplify signals after signal combination. In addition, because the signals that can be combined may be mutually orthogonal signals, noise and interference of the signals can be reduced. Even if the signals are amplified, the noise and interference of the signals are low.

According to a second aspect, a signal forwarding method is provided. The method may be performed by a network device or a chip with a similar function of the network device. In this method, the network device may send first information. The first information may include a parameter that indicates a terminal device to send a signal on a first frequency. The network device may receive a signal on a second frequency and a third frequency based on the parameter. The second frequency and the third frequency are different, and at least one of the second frequency and the third frequency is different from the first frequency. The network device may combine signals received on the second frequency and the third frequency.

In a possible implementation, the network device may send one or more pieces of first indication information. One piece of first indication information may indicate a frequency domain position to which a signal corresponding to a receive channel of a relay node is mapped. The frequency domain position is a frequency domain position on one frequency of the second frequency and the third frequency.

In a possible implementation, the network device may send N frequency shift modes. One frequency shift mode may correspond to one receive channel of the relay node, and one frequency shift mode may indicate one frequency shift value. The frequency shift value may be a frequency shift value of shifting the first frequency to the second frequency, or the frequency shift value may be a frequency shift value of shifting the first frequency to the third frequency.

In a possible implementation, the network device may send one or more pieces of second indication information. One piece of first indication information may indicate a transmit channel to which a signal corresponding to one receive channel of the relay node is mapped.

In a possible implementation, the network device may receive a quantity of receive channels, a quantity of transmit channels, and a maximum quantity of supported frequencies from the relay node.

In a possible implementation, the network device may receive a supported mapping relationship between a receive channel and a transmit channel from the relay node.

In a possible implementation, the received signal may be an amplified signal.

According to a third aspect, a communication apparatus is provided. The apparatus may include modules/units configured to perform the method in any one of the first aspect or the possible implementations of the first aspect, or may further include modules/units configured to perform the method in any one of the second aspect or the possible implementations of the second aspect. For example, the apparatus includes a processing unit and a communication unit.

For example, when the apparatus includes the modules/units configured to perform the method in any one of the first aspect or the possible implementations of the first aspect, the processing unit is configured to combine N signals into one signal, where the N signals correspond to N receive channels, each signal is a signal obtained by performing frequency shift on a signal received by a receive channel corresponding to each signal, or each signal is a signal obtained without performing frequency shift on a signal received by a receive channel corresponding to each signal, and at least one signal included in the N signals is a signal obtained by performing frequency shift on a signal received by a receive channel corresponding to the at least one signal, where N is greater than or equal to 2; and the communication unit is configured to send the combined one signal.

In a design, at least two signals in the N signals have different frequency shift amounts.

In a design, a frequency shift amount corresponding to each receive channel in the N receive channels varies, and a frequency shift amount of a signal received by one receive channel remains unchanged; and the at least one signal is a signal obtained by performing, based on a frequency shift amount corresponding to the receive channel corresponding to the at least one signal, frequency shift on the signal received by the receive channel corresponding to the at least one signal.

In a design, the N signals come from N groups, and each group includes K signals, where K is greater than or equal to 1; the N groups are obtained by grouping a plurality of signals received by the N receive channels; and each signal in the N signals is a signal obtained by performing frequency shift on each signal in the plurality of signals, or each signal in the N signals is one of the plurality of signals.

In a design, different groups in the N groups correspond to different frequency shift amounts, and signals in one group have a same frequency shift amount.

In a design, different groups in the N groups correspond to different frequency shift amounts, and signals in one group have a same frequency shift amount.

In a design, the communication unit is further configured to receive one or more pieces of first indication information from a network device, where one piece of first indication information indicates a frequency domain position to which a signal corresponding to one receive channel of the apparatus is mapped, and a frequency domain position of a frequency-shifted signal is determined based on the first indication information.

In a design, the communication unit is further configured to receive N frequency shift modes from a network device, where one frequency shift mode corresponds to one receive channel, one frequency shift mode indicates one frequency shift value, and the at least one signal is a signal obtained by performing, based on a frequency shift value indicated by a frequency shift mode corresponding to the receive channel corresponding to the at least one signal, frequency shift on the signal received by the receive channel corresponding to the at least one signal.

In a design, the communication unit is further configured to receive one or more pieces of second indication information from the network device, where one piece of first indication information indicates a transmit channel to which a signal corresponding to one receive channel of the apparatus is mapped; and when combining the N signals into the one signal, the processing unit is specifically configured to combine the N signals into the one signal.

In a design, the communication unit is further configured to send a quantity of receive channels, the quantity of transmit channels, and a maximum quantity of supported frequencies to the network device.

In a design, the communication unit is further configured to send a supported mapping relationship between a receive channel and a transmit channel to the network device.

In a design, the processing unit is further configured to amplify the N signals, or amplify the one signal.

For example, when the apparatus includes the modules/units configured to perform the method in any one of the second aspect or the possible implementations of the second aspect, the communication unit is configured to send first information, where the first information includes a parameter that indicates a terminal device to send a signal on a first frequency; the communication unit is further configured to receive a signal on a second frequency and a third frequency based on the parameter, where the second frequency is different from the third frequency, and at least one of the second frequency and the third frequency is different from the first frequency; and the processing unit is configured to combine the signals received on the second frequency and the third frequency.

In a design, the communication unit is further configured to send one or more pieces of first indication information, where one piece of first indication information indicates a frequency domain position to which a signal corresponding to one receive channel of a relay node is mapped, and the frequency domain position is a frequency domain position on one frequency of the second frequency and the third frequency.

In a design, the communication unit is further configured to send N frequency shift modes, where one frequency shift mode corresponds to one receive channel of the relay node, one frequency shift mode indicates one frequency shift value, and the frequency shift value is a frequency shift value of shifting the first frequency to the second frequency, or the frequency shift value is a frequency shift value of shifting the first frequency to the third frequency.

In a design, the communication unit is further configured to send one or more pieces of second indication information, where one piece of first indication information indicates a transmit channel to which a signal corresponding to one receive channel of the relay node is mapped.

In a design, the communication unit is further configured to receive a quantity of receive channels, a quantity of transmit channels, and a maximum quantity of supported frequencies from the relay node.

In a design, the communication unit is further configured to receive a supported mapping relationship between a receive channel and a transmit channel from the relay node.

In a design, the received signal is an amplified signal.

According to a fourth aspect, a communication apparatus is provided. The communication apparatus includes a processor and a transceiver. The transceiver performs the transceiver step of the method in any one of the first aspect or the possible implementations of the first aspect, or performs the transceiver step of the method in any one of the second aspect or the possible implementations of the second aspect. When a controller runs, the processor performs, by using a hardware resource in the controller, the processing step other than the transceiver step in the method in any one of the first aspect or the possible implementations of the first aspect, or performs the processing step other than the transceiver step in the method in any one of the second aspect or the possible implementations of the second aspect.

In a possible implementation, the communication apparatus further includes a memory. The memory may be located inside the apparatus, or may be located outside the apparatus, and is connected to the apparatus.

In a possible implementation, the memory may be integrated with the processor.

According to a fifth aspect, a chip is provided. The chip includes a logic circuit and a communication interface.

In a design, the logic circuit is configured to combine N signals into one signal, where the N signals correspond to N input channels, each signal is a signal obtained by performing frequency shift on a signal input by an input channel corresponding to each signal, or each signal is a signal obtained without performing frequency shift on a signal input by an input channel corresponding to each signal, and at least one signal included in the N signals is a signal obtained by performing frequency shift on a signal input by an input channel corresponding to the at least one signal, where N is greater than or equal to 2; and the communication interface is configured to output the combined one signal.

In a design, the communication interface is configured to output first information, and the first information includes a parameter that indicates a terminal device to send a signal on a first frequency. The communication interface is further configured to input signals on a second frequency and a third frequency based on the parameter, the second frequency and the third frequency are different, and at least one of the second frequency and the third frequency is different from the first frequency. The logic circuit is configured to combine the signals that are input on the second frequency and the third frequency.

According to a sixth aspect, this application provides a computer-readable storage medium. The computer-readable storage medium stores instructions, and when the instructions are run on a computer, the computer is enabled to perform the method according to the foregoing aspect.

According to a seventh aspect, this application provides a computer program product for storing instructions. When the computer program product is run on a computer, the computer is enabled to perform the method in the foregoing aspect.

According to an eighth aspect, this application provides a communication system, including at least one terminal device and at least one network device.

In addition, for beneficial effect of the second aspect to the seventh aspect, refer to the beneficial effect shown in the first aspect and the second aspect.

**BRIEF DESCRIPTION OF DRAWINGS**

FIG. 1A is a schematic diagram of a repeater;
FIG. 1B is a schematic diagram of a structure of a relay node;
FIG. 2 is a schematic diagram of a communication system according to an embodiment of this application;
FIG. 3A is a schematic diagram of frequency shift forwarding;
FIG. 3B is a schematic diagram of intra-frequency forwarding;
FIG. 4A is one of schematic diagrams of channel mapping between an access side and a backhaul side;
FIG. 4B is one of schematic diagrams of channel mapping between an access side and a backhaul side;
FIG. 5 is an example flowchart of a signal forwarding method according to an embodiment of this application;
FIG. 6A is one of schematic diagrams of a signal forwarding method according to an embodiment of this application;
FIG. 6B is one of schematic diagrams of a signal forwarding method according to an embodiment of this application;
FIG. 6C is one of schematic diagrams of a signal forwarding method according to an embodiment of this application;
FIG. 7 is one of schematic diagrams of a signal forwarding method according to an embodiment of this application;
FIG. 8A is one of schematic diagrams of a beam mapping relationship of a relay node according to an embodiment of this application;
FIG. 8B is one of schematic diagrams of a beam mapping relationship of a relay node according to an embodiment of this application;
FIG. 8C is one of schematic diagrams of a beam mapping relationship of a relay node according to an embodiment of this application;
FIG. 9 is one of schematic diagrams of a beam mapping relationship of a relay node according to an embodiment of this application;
FIG. 10 is one of schematic diagrams of a communication apparatus according to an embodiment of this application; and
FIG. 11 is one of schematic diagrams of a communication apparatus according to an embodiment of this application.

**DESCRIPTION OF EMBODIMENTS**

The following explains and describes terms in embodiments of this application.

1. A receive channel may also be referred to as a channel, an antenna port, a port, a receive port, or a receive beam, and may be a channel used to receive a signal. One receive channel may correspond to an antenna array element, an antenna subarray, an antenna array element group, or a beam. For example, the receive channel may be a channel for receiving an uplink signal of a terminal device, or may be a channel for receiving a downlink signal of a network device. Optionally, each receive channel of a relay node may correspond to a plurality of antenna array elements, and received signals of the plurality of antenna array elements are combined, to obtain one received signal of the receive channel. Before combination, each receive antenna array element may perform phase shift processing.

2. A transmit channel may also be referred to as a channel, an antenna port, a port, a transmit port, or a transmit beam, and may be a channel used to send a signal. For example, the channel may be a channel for sending an uplink signal of a terminal device, or may be a channel for sending a downlink signal of a network device. Optionally, each transmit channel of a relay node may correspond to a plurality of antenna array elements, and a signal of the transmit channel is sent through a plurality of antenna ports. Before sending, each transmit channel may perform phase shift processing.

With reference to the accompanying drawings, the following describes technical solutions provided in embodiments of this application.

3. A backhaul link may be a link between a relay node and a base station, and may also be referred to as a fronthaul link.

4. An access link may be a link between a relay node and a terminal device.

5. A frequency domain position may also be referred to as a frequency, a center frequency band, a component carrier, a serving cell, a carrier, or a bandwidth part (bandwidth part, BWP), and may be a frequency domain resource used to carry a signal. The frequency domain position may be used by a relay device to forward an uplink signal to a network device. The frequency domain position may be preconfigured by the network device for a relay node, or may be indicated by the network device to the relay node. This is not specifically limited in this application.

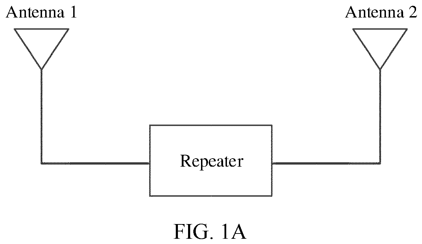

FIG. 1A is a schematic diagram of a structure of a repeater. The repeater may include two antennas: an antenna 1 and an antenna 2 shown in FIG. 1A. During downlink amplification, the antenna 1 receives a downlink signal sent by a base station, and after power amplification, an amplified downlink signal is sent by the antenna 2. Then, a terminal device receives the amplified signal sent by the antenna 2. During uplink amplification, the antenna 2 receives an uplink signal sent by the terminal device, and after power amplification, an amplified uplink signal is sent by the antenna 1. Then, the base station receives the signal sent by the antenna 1. In FIG. 1A, the antenna 1 and the antenna 2 may alternatively be replaced with a plurality of antennas or antenna arrays. When an antenna array is used, a backhaul link or an access link of the repeater may use beam-based transmission, to increase a coverage capability.

However, currently, a fixed or an omnidirectional beam is generally used on an access side of the repeater. Omnidirectional amplification has a disadvantage of an insufficient gain, and the fixed beam can cover a small area. Therefore, gains provided by the repeater at present cannot meet requirements of some extreme coverage-limited scenarios.

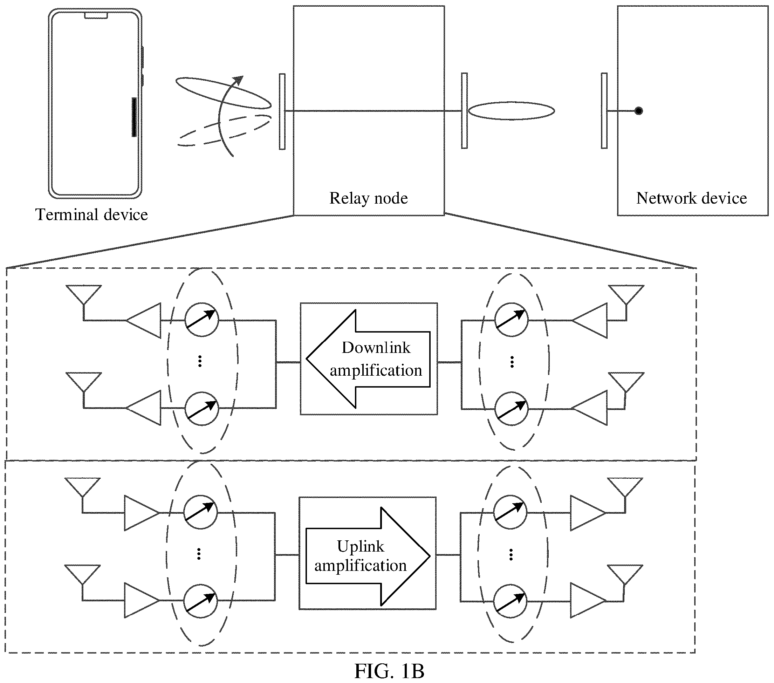

FIG. 1B is a schematic diagram of a structure of a relay node according to an embodiment of this application. It should be understood that the relay node may have a plurality of antenna panels. In FIG. 1B, a relay node having two antenna panels is used as an example for description. One antenna panel of the relay node faces a donor base station, and is configured to: receive a downlink signal of the donor base station or forward an uplink signal to the donor base station. The other antenna panel faces a terminal device, and is configured to: receive an uplink signal sent by the terminal device or forward a downlink signal to the terminal device. To improve a coverage capability of the relay node, antenna panels on a backhaul side and an access side of the relay node may obtain an array gain through beamforming. Steps of downlink forwarding of the relay node are as follows:

(1) The relay node receives the downlink signal from the donor base station by using a backhaul beam. The backhaul beam may be obtained by using a beam training procedure.
(2) The relay node forwards, on the access side by using a specific beam, a downlink signal received on the backhaul side.

Steps of uplink forwarding of the relay node are as follows:

(1) The relay node receives an uplink signal on the access side by using a specific beam.
(2) The relay node forwards, to the donor base station on the backhaul side by using the backhaul beam, an uplink signal received on the access side of the relay node.

It should be understood that, when the antenna on the backhaul side of the relay node has mutuality, a backhaul beam used for uplink forwarding may be the same as a backhaul beam used for downlink forwarding.

For each of uplink forwarding and downlink forwarding, the relay node needs to determine an access beam used for forwarding. Generally, a wide beam has a large coverage area, but a beam gain of the wide beam is low; and a narrow beam has a high beam gain, but a coverage area of the narrow beam is narrow. In addition, the relay node needs to determine, based on a beam scanning mechanism, a specific beam for communicating with the terminal device and a backhaul beam for communicating with the base station. However, due to the beam scanning mechanism, the relay node can forward a signal only to a terminal device in a single direction at a single moment. Consequently, it is difficult for the terminal device to perform spatial multiplexing and frequency division multiplexing, and a forwarding throughput of the relay node is reduced. In addition, to select an appropriate access beam, the donor base station needs an additional reference signal resource to assist in access beam training of the relay node, resulting in an additional beam training delay and a decrease in a cell throughput.

Based on the foregoing problem, embodiments of this application provide a signal forwarding method and apparatus. Embodiments of this application are applicable to a wireless communication system including a relay device. The relay device may include but is not limited to an ordinary fixed relay node like an L1-LAB (L0-IAB, or RF-IAB) node, and a mobile relay node like a mobile L1-IAB node. The relay node may also be referred to as a repeater (repeater), an amplifier, a smart amplifier, a smart repeater (smart repeater), and the like. In addition, the solutions of this application may be applied to a reflection-based relay device, for example, an intelligent reflecting surface (intelligent reflecting surface, IRS) or a reconfigurable intelligent surface (reconfigurable intelligent surface, RIS). The technical solutions in embodiments of this application may be applied to various communication systems, for example, a long term evolution (long term evolution, LTE) system, a worldwide interoperability for microwave access (worldwide interoperability for microwave access, WiMAX) communication system, a future 5th generation (5th Generation, 5G) system like a new radio access technology (new radio access technology, NR), and a future communication system like a 6G system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

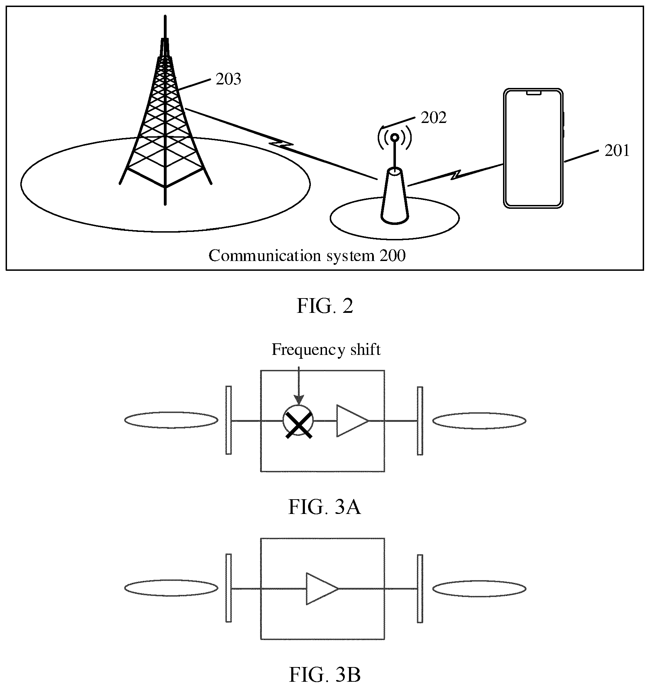

To better understand embodiments of this application, the following describes in detail a communication system applicable to embodiments of this application by using a communication system shown in FIG. 2 as an example. FIG. 2 is a schematic diagram of a communication system applicable to a signal forwarding method according to an embodiment of this application. As shown in FIG. 2, the communication system 200 may include a terminal device 201, a relay device 202, and a network device 203.

The terminal device in this embodiment of this application may also be referred to as user equipment (user equipment, UE), a mobile station (mobile station, MS), a mobile terminal (mobile terminal, MT), or the like, and is a device that provides voice and/or data connectivity to a user. For example, the terminal device may be an access terminal, a terminal unit, a terminal station, a mobile station, a mobile console, a remote station, a remote terminal, a mobile device, a user terminal, a terminal, a wireless communication device, a terminal agent, a terminal apparatus, or the like. The access terminal may be a cellular phone, a cordless phone, a session initiation protocol (session initiation protocol, SOP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G network, or a terminal device in a future evolved PLMN network.

The network device in this application includes, for example, an access network (access network, AN) device such as a base station (for example, an access point), and may be a device that is in an access network and that communicates with a wireless terminal over an air interface through one or more cells. Alternatively, the network device is, for example, a road side unit (road side unit, RSU) in a vehicle-to-everything (vehicle-to-everything, V2X) technology. For example, the network device may be a base transceiver station (base transceiver station, BTS) in a global system for mobile communication (global system for mobile communication, GSM) or a code division multiple access (code division multiple access, CDMA) network, or may be an NB (NodeB) in wideband code division multiple access (wideband code division multiple access, WCDMA), or may be an eNB or an eNodeB (evolved NodeB) in long term evolution (long term evolution, LTE). Alternatively, the network device may be a radio controller in a cloud radio access network (cloud radio access network, CRAN) scenario. The network device may alternatively be a base station device in a future 5G network or a network device in a future evolved public land mobile network (public land mobile network, PLMN) network. Alternatively, the network device may be a wearable device or a vehicle-mounted device, or may be a network node included in a base station, for example, a baseband unit (BBU), a central unit (central unit, CU), or a distributed unit (distributed unit, DU). This is not limited in this embodiment of this application. Alternatively, the network device may be a relay device, for example, an integrated access and backhaul (integrated access and backhaul, IAB) node (IAB node) node in the NR or an RN in the LTE.

In embodiments of this application, an apparatus configured to implement a function of the network device may be a network device, or may be an apparatus, for example, a chip system, that can support the network device in implementing the function. The apparatus may be installed in the network device. In the technical solutions provided in embodiments of this application, the technical solutions provided in embodiments of this application are described by using an example in which the apparatus configured to implement the function of the network device is the network device.

The relay device in this application may also be referred to as a relay node, which is one of the foregoing base station or terminal device that has a forwarding function, or may be an independent device form, or may be a vehicle-mounted device, or an apparatus disposed on a mobile object. The relay node may include a repeater, a smart repeater, an intelligent reflecting surface (intelligent reflecting surface, IRS), a reconfigurable intelligent surface (reconfigurable intelligent surface, RIS), and the like.

With reference to the accompanying drawings, the following describes solutions in which the relay node performs intra-frequency forwarding and inter-frequency/frequency shift forwarding.

FIG. 3A is a schematic diagram of frequency shift forwarding. During frequency shift forwarding, a relay node performs frequency relocation processing on a received signal, so that a center frequency of the received signal changes, and then the relay node may amplify and forward a frequency-shifted signal. Herein, a difference between a center frequency of the frequency-shifted signal and the center frequency of the received signal may be referred to as a frequency shift amount, and the frequency shift amount may be denoted as $\Delta F$. Herein, $\Delta F$

may be greater than 0, or may be less than 0.

For uplink frequency shift forwarding, a network device should determine, based on the frequency shift amount of the relay node, a frequency domain position for demodulating an uplink signal. For example, it is assumed that the network device schedules a terminal device to send the uplink signal at a frequency domain position F1. After frequency shift forwarding performed by the relay node, the frequency domain position of the uplink signal changes to F2. Herein, F2 = F1 + $\Delta$F. Therefore, the network device should receive the uplink signal of the terminal device at the frequency domain position F2.

For downlink frequency shift forwarding, the network device should determine, based on the frequency shift amount of the relay node, the frequency domain position for sending a downlink signal. For example, it is assumed that the network device schedules or indicates the terminal device to receive the downlink signal at the frequency domain position F1. Because the frequency shift amount of the relay node is $\Delta$F, the network device may send the downlink signal at a frequency domain position F3. Herein, F3 = F 1 - $\Delta$F.

FIG. 3B is a schematic diagram of intra-frequency forwarding. During intra-frequency forwarding, a relay node amplifies and forwards a received signal. A frequency of the received signal of the relay node is the same as a frequency of a forwarded signal of the relay node.

For example, for uplink frequency shift forwarding, a network device schedules a terminal device to send an uplink signal at a frequency domain position F1. After amplification and forwarding performed by the relay node, the frequency domain position of the uplink signal is still F1. Therefore, the network device may receive the uplink signal of the terminal device at the frequency domain position F1.

For example, for downlink frequency shift forwarding, the network device sends a downlink signal at a frequency domain position F2. After amplification and forwarding performed by the relay node, the frequency domain position of the downlink signal is still F2. Therefore, the network device may schedule or indicate the terminal device to receive the downlink signal at the frequency domain position F2.

With reference to the accompanying drawings, the following explains and describes polarized channel mapping existing when a relay node performs uplink forwarding.

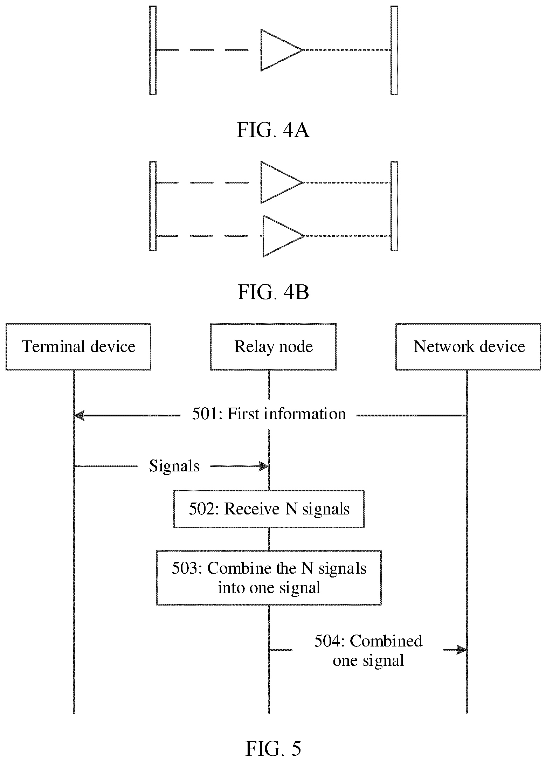

As shown in FIG. 4A, an access antenna panel and a backhaul antenna panel each have a single channel. The relay node amplifies a signal received by a receive channel corresponding to the access antenna panel, and then sends an amplified signal through a transmit channel on a backhaul side.

As shown in FIG. 4B, an access antenna panel and a backhaul antenna panel each have two polarized channels. In an amplification process, two accessed polarized channels are connected to the two backhaul polarized channels in a one-to-one manner. For example, after amplifying a received signal of a polarized channel $N_1$, the relay node forwards an amplified signal through a polarized channel $K_1$, and after amplifying a received signal of a polarized channel $N_2$, the relay node forwards an amplified signal through a polarized channel $K_2$. In this embodiment of this application, a polarized channel is a receive channel or a transmit channel corresponding to different polarization directions of an antenna or an antenna group. During implementation, a backhaul antenna or an access antenna of the relay may have one or two polarization directions, which respectively correspond to one or two polarized channels.

As shown in FIG. 4B, an access side has two antenna subarrays, each subarray corresponds to one channel, and the backhaul antenna panel has two polarized channels. In the amplification process, the two accessed subarray channels are connected to the two backhaul polarized channels in a one-to-one manner. For example, after amplifying a received signal of a subarray channel $N_1$, the relay node forwards an amplified signal through a polarized channel $K_1$, and after amplifying a received signal of a subarray channel $N_2$, the relay node forwards an amplified signal through a polarized channel $K_2$.

FIG. 5 is an example flowchart of a signal forwarding method according to an embodiment of this application. The method may include the following steps.

Step 501: A network device sends first information.

The first information may be sent by the network device to a terminal device. The first information may include a parameter that indicates the terminal device to send a signal on a first frequency. The parameter may include a time domain resource, a frequency domain resource, and the like for sending a signal. The frequency domain resource may correspond to a frequency domain resource on the first frequency. It should be noted that a relay node cannot receive or perceive the first information sent by the network device.

Step 502: The relay node receives N signals.

The N signals may include a signal of the terminal device scheduled by the network device in the step 401. It should be noted that the N signals may come from a same terminal device, or may come from different terminal devices. The N signals received by the relay node include a signal received on the first frequency. Herein, N may be greater than or equal to 2.

Step 503: The relay node combines the N signals into one signal.

The N signals correspond to N receive channels. Each signal may be a signal obtained by performing frequency shift on a signal received by a receive channel corresponding to each signal. Alternatively, each signal may be a signal obtained without performing frequency shift on a signal received by a receive channel corresponding to each signal. It should be noted that, at least one signal of the N signals is a signal obtained by performing frequency shift on a signal received by a receive channel corresponding to the at least one signal.

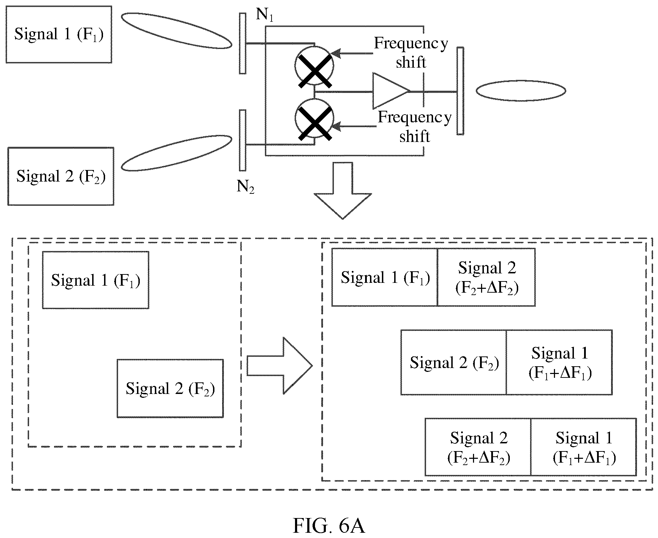

For example, as shown in FIG. 6A, the relay node has two receive channels: N1 and N2. The relay node receives two signals. Before combining the two signals, the relay node may perform frequency shift on at least one of the two signals. For example, the relay node may perform frequency shift on the signal received by the receive channel $N_1$, where a frequency shift amount is $\Delta F_1$. Alternatively, the relay node may perform frequency shift on the signal received by the receive channel $N_2$, where a frequency shift amount is $\Delta F_2$. Alternatively, the relay node may respectively perform frequency shift on the signals received by the receive channel $N_1$ and the receive channel $N_2$, where frequency shift amounts are respectively $\Delta F_1$ and $\Delta F_2$. The relay node may combine two signals that have undergone the foregoing processing into one signal. When the relay node performs frequency shift processing on both signals, $\Delta F_1$ and $\Delta F_2$ are different. It should be understood that one of $\Delta F_1$ and $\Delta F_2$ may be 0.

Optionally, the N signals that are combined into one signal may be orthogonal to each other. The relay node may perform frequency shift processing on the N signals that are to be combined into one signal, so that the N signals that are to be combined into one signal are orthogonal to each other. This can reduce interference and noise. For example, as shown in FIG. 6A, the relay node receives two signals. Before combining the two signals, the relay node may perform frequency shift processing on at least one of the two signals, so that the two signals may be orthogonal to each other. Herein, that two or more signals are orthogonal to each other means that the two or more signals have different center frequencies or frequency shift amounts.

Based on the foregoing solution, the relay node may receive a plurality of signals at a same moment, and may forward the plurality of signals, to implement parallel receiving of a plurality of beams. Optionally, each receive beam may have large angle coverage at one moment, to reduce time and overheads of a beam alignment process. In addition, the relay node may combine the plurality of signals through frequency shift processing. Because the to-be-combined signals may be mutually orthogonal signals, interference and noise of the signals can be reduced.

The following describes a method in which the relay node performs frequency shift processing on a received signal.

Method 1: Perform frequency shift based on different receive channels.

In a possible implementation, when performing frequency shift processing on received signals, the relay node may separately perform frequency shift on the received signals based on different receive channels of the received signals. A signal received by one receive channel may have a same frequency shift amount, and signals received by different receive channels may have different frequency shift amounts. Optionally, the relay node may alternatively choose not to perform frequency shift processing on signals received by some receive channels.

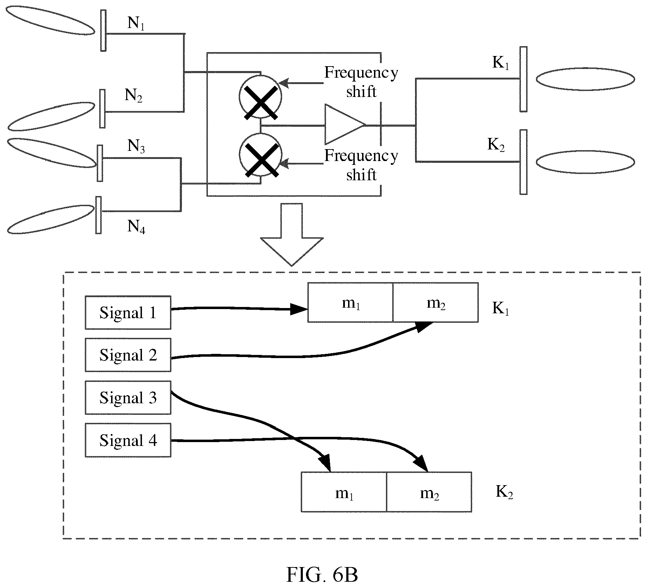

In an example, a resource used when the relay node forwards an uplink signal to the network device may include M frequency domain positions, where M is greater than or equal to 0. The relay node may map a signal of an $n^{th}$ receive channel to an $m^{th}$ frequency domain position of a $k^{th}$ transmit channel. As shown in FIG. 6B, the relay node has four receive channels: $N_1$, $N_2$, $N_3$, and $N_4$, and two transmit channels: $K_1$, and $K_2$. The relay node receives a signal 1, a signal 2, a signal 3, and a signal 4 through the four receive channels. The four signals may be respectively received by four receive channels, and each receive channel receives one signal at each moment. For example, the relay node may map the signal 1 received by the receive channel $N_1$ to an $m_1^{th}$ frequency domain position of the transmit channel $K_1$, map the signal 2 received by the receive channel $N_2$ to an $m_2^{th}$ frequency domain position of the transmit channel $K_1$, map a signal 5 received by the receive channel $N_3$ to an $m_1^{th}$ frequency domain position of the transmit channel $K_2$, and map a signal 7 received by the receive channel $N_4$ to an $m_2^{th}$ frequency domain position of the transmit channel $K_2$.

It should be noted that a signal mapping relationship shown in FIG. 6B is merely an example, and a sequence of frequency domain positions of signals mapped to a same transmit channel is not specifically limited, and may be not related to a receive channel of each of the signals.

Optionally, the network device may send one or more pieces of first indication information to the relay node, where one piece of first indication information may indicate a frequency domain position of a transmit channel to which a signal corresponding to one receive channel is mapped. The frequency domain position may be a component carrier location, a BWP location, frequency shift information, or a common resource block (common resource block, CRB) location, for example, may be a component carrier (component carrier, CC) number, a CC carrier frequency, a BWP number, information about a frequency-shifted center frequency, a frequency number, or the like. Alternatively, the network device may indicate, to the relay node by using one piece of first indication information, a frequency domain position of a transmit channel to which a signal corresponding to each receive channel in all receive channels of the relay node is mapped. For example, the first indication information may indicate the relay node to map the signal of the $n^{th}$ receive channel to an $mi^{th}$ frequency domain position of the $k^{th}$ transmit channel. Herein, i = 1, 2, 3, ...; and n is greater than or equal to 1 and less than or equal to a total quantity of receive channels of the relay node, and k is greater than or equal to 1 and less than or equal to a total quantity of transmit channels of the relay node.

It should be noted that the $m_i^{th}$ frequency do-

main position does not constitute a limitation on an index of a frequency domain position, and the $m_i^{th}$ frequency domain position may be one of available frequency domain positions indicated by the network device to the relay node.

In another example, the network device may indicate N frequency shift modes to the relay node. One frequency shift mode may indicate to perform frequency shift, or may indicate not to perform frequency shift. The frequency shift mode indicating frequency shift may further correspond to a frequency shift amount, and the frequency shift amount may be a real number. The frequency shift amount may be, for example, 50 MHz and 100 MHz, or may be Yi physical resource blocks (physical resource block, PRB), $Y_2$ physical resource elements (resource element, RE), or the like. The frequency shift amount may be a positive number or a negative number, and the positive number and the negative number indicate different frequency shift directions. For example, the positive number indicates frequency shift to a higher frequency, and the negative number indicates frequency shift to a lower frequency. Based on a frequency shift mode corresponding to each receive channel, the relay node may perform frequency shift or not perform frequency shift on a signal received by the receive channel, and map the receive channel to a transmit channel corresponding to the receive channel. The mapping relationship between the receive channel and the transmit channel may be indicated by the network device, or may be specified in a communication protocol. This is not specifically limited in this application. It should be understood that signals received by a same receive channel may be mapped to different transmit channels, and signals of different receive channels may be mapped to different transmit channels, or may be mapped to a same transmit channel. When the signals of different receive channels are mapped to a same transmit channel, a combination or superposition operation needs to be performed.

Optionally, the network device may indicate one or more pieces of second indication information to the relay node. One piece of second indication information may indicate a transmit channel to which a receive channel of the relay node is mapped. Alternatively, the network device may indicate, to the relay node by using one piece of second indication information, a transmit channel to which each receive channel of the relay node is mapped. For example, the second indication information may indicate the relay node to map a signal of an $n^{th}$ receive channel to a $k^{th}$ transmit channel. Herein, n is greater than or equal to 1 and less than or equal to a total quantity of receive channels of the relay node, and k is greater than or equal to 1 and less than or equal to a total quantity of transmit channels of the relay node. Before mapping the signal to the transmit channel, the relay node may perform frequency shift on the signal of each receive channel based on the N frequency shift modes, and then map, based on the second indication information, a frequency-shifted signal to a corresponding transmit channel.

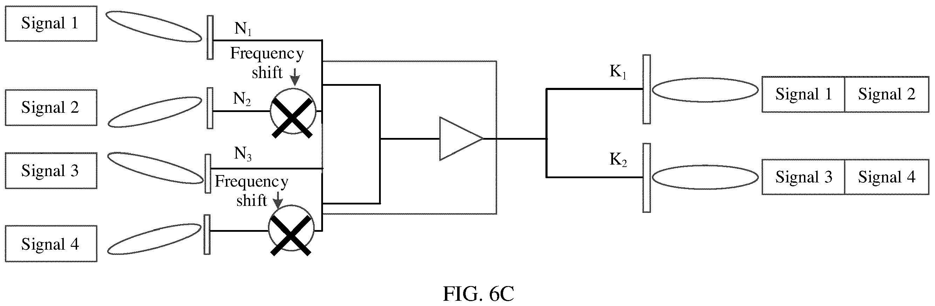

As shown in FIG. 6C, the relay node receives a signal 1 through a receive channel $N_1$, receives a signal 2 through a receive channel $N_2$, receives a signal 3 through a receive channel $N_3$, and receives a signal 4 through a receive channel $N_4$. The relay node receives four frequency shift modes from the network device. Two frequency shift modes indicate to perform on frequency shift processing on a signal received by the receive channel $N_1$ and a signal received by the receive channel $N_3$; one frequency shift mode indicates to perform frequency shift processing on a signal received by the receive channel $N_2$, and a frequency shift amount is $\Delta F_1$; and one frequency shift mode indicates to perform frequency shift processing on a signal received by the receive channel $N_4$, and a frequency shift amount is $\Delta F_2$. $\Delta F_1$ and $\Delta F_2$ may be the same or may be different. In addition, transmit channels mapped to the receive channel $N_1$ and the receive channel $N_4$ of the relay node include $K_1$ and $K_2$, and transmit channels mapped to the receive channel $N_2$ and the receive channel $N_3$ may include the transmit channel $K_1$ and the transmit channel $K_2$. The relay node may separately combine two groups of signals having different frequency shift amounts in the four signals into two signals, and send the two signals through the transmit channel $K_1$ and the transmit channel $K_2$.

The relay node may map the signal 1 and the signal 4 to the transmit channel $K_1$, and map the signal 2 and the signal 3 to the transmit channel $K_2$. Alternatively, the relay node may map the signal 1 and the signal 2 to the transmit channel $K_1$, and map the signal 3 and the signal 4 to the transmit channel $K_2$. Alternatively, the relay node may map the signal 1 and the signal 4 to the transmit channel $K_2$, and map the signal 2 and the signal 3 to the transmit channel $K_1$. Alternatively, the relay node may map the signal 1 and the signal 2 to the transmit channel $K_2$, and map the signal 3 and the signal 4 to the transmit channel $K_1$. It should be understood that FIG. 6C shows only one mapping manner. To be specific, the signal 1 and the signal 2 are mapped to the transmit channel $K_1$, and the signal 3 and the signal 4 are mapped to the transmit channel $K_2$.

Method 2: Perform frequency shift based on groups.

In a possible implementation, the relay node may group received signals into Z groups, and each group may include K signals. Herein, Z may be greater than 1 and less than or equal to a quantity N of receive channels. For example, the relay node may divide the received signals into the Z groups based on different receive channels, and in this case, Z is equal to N; or the relay node may group signals that are received by every two receive channels and that are in the received signals into one group, all the signals are divided into Z groups, and in this case, Z is less than N. A $z^{th}$ group of signals includes $K\_z$ signals, and a $k^{th}$ signal in the $z^{th}$ group is denoted as $s_k^z(t)$ . The relay node may perform a frequency shift operation on the received signals, and a component of a $k^{th}$ signal in a $z^{th}$ group of frequency-shifted signals is denoted as $x_k^z(t) = s_k^z(t)d_k^z(t)$ .

Herein, $d_k^z(t)$ is a frequency shift function. It should be noted that frequency shift processing may not be performed on signals in some groups, that is, $d_k^z(t)$ is a constant. In addition, $d_{k_1}^z(t) = d_{k_2}^z(t)$ , that is, a value of k does not affect the frequency shift function, that is, frequency shift amounts of received signals in a group are the same. The relay node may combine the Z groups of signals, to obtain K combined signals. The relay node may combine a $k^{th}$ signal in each group. Specifically,

$$z_k(t) = \sum_n x_k^z(t).$$

Optionally, the foregoing K may be a quantity of transmit channels of the relay node. For example, K may be 1, to be specific, signals received by all receive channels are combined into one signal after frequency shift. For another example, K may be 2, to be specific, signals received by all receive channels are combined into two signals after frequency shift. Optionally, the two transmit channels correspond to two polarization directions of a transmit antenna. Alternatively, the two transmit channels may correspond to two subarrays of a transmit antenna. The foregoing K is greater than or equal to 1.

In an example, a resource used when the relay node forwards an uplink signal to the network device may include M frequency domain positions, where M is greater than or equal to 0. The relay node may map a signal of the $z^{th}$ group to an $m^{th}$ frequency domain position of the $k^{th}$ transmit channel.

Optionally, the network device may send one or more pieces of first indication information to the relay node, where one piece of first indication information may indicate a frequency domain position of a transmit channel to which a signal corresponding to one group is mapped. Alternatively, the network device may indicate, to the relay node by using one piece of first indication information, a frequency domain position of a transmit channel to which a signal corresponding to each group in all group of the relay node is mapped. For example, the first indication information may indicate the relay node to map a signal of an $n^{th}$ group to an $m_i^{th}$ frequency domain position of the $k^{th}$ transmit channel. Herein, i = 1, 2, 3, ...; and n is greater than or equal to 1, and k is greater than or equal to 1 and less than or equal to a total quantity of transmit channels of the relay node.

In another example, the network device may indicate Z frequency shift modes to the relay node. One frequency shift mode may indicate to perform frequency shift, or may indicate not to perform frequency shift. The frequency shift mode indicating frequency shift may further correspond to a frequency shift amount, and the frequency shift amount may be a real number. The frequency shift amount may be, for example, 50 MHz and 100 MHz, or may be Yi physical resource blocks (physical resource block, PRB), $Y_2$ physical resource elements (resource element, RE), or the like. The frequency shift amount may be a positive number or a negative number, and the positive number and the negative number indicate different frequency shift directions. For example, the positive number indicates frequency shift to a higher frequency, and the negative number indicates frequency shift to a lower frequency. The relay node may perform frequency shift or not perform frequency shift on signals of each group based on a corresponding frequency shift mode, and map each signal to a corresponding transmit channel based on a mapping relationship between a receive channel and a transmit channel. The mapping relationship between the receive channel and the transmit channel may be indicated by the network device, or may be specified in a communication protocol. This is not specifically limited in this application. It should be understood that signals received by a same receive channel may be mapped to different transmit channels, and signals of different receive channels may be mapped to different transmit channels, or may be mapped to a same transmit channel. When the signals of different receive channels are mapped to a same transmit channel, a combination or superposition operation needs to be performed.

Optionally, the network device may indicate one or more pieces of second indication information to the relay node. The second indication information may indicate the mapping relationship between the receive channel and the transmit channel of the relay node. For details, refer to related descriptions in Method 1, and details are not described herein again.

In a possible implementation, the relay node may report capability information of the relay node to the network device. The capability information may include a quantity of supported receive channels and transmit channels, a maximum quantity of supported frequencies, frequency shift modes, and frequency domain positions, and the like.

Optionally, the relay node may have one or more fixed mapping relationships between the receive channel and the transmit channel. In this case, the relay node may report the supported mapping relationship between a receive channel and a transmit channel to the network device. For example, the receive channel $N_2$ may be mapped to a transmit channel $K_1$ or $K_2$.

The network device may indicate the first indication information or the N frequency shift modes and/or the second indication information to the relay node based on the capability information reported by the relay node. Optionally, due to an implementation architecture limitation or the like, some receive channels of the relay node can be mapped to only some transmit channels, and the relay node may report a mapping relationship between the some receive channels and the some transmit channels to the network device.

In another possible implementation, the relay node needs to amplify the received signal. In an example, the relay node may perform power amplification after signal combination is completed. In another example, the relay node performs power amplification on signals received by receive channels, and then performs combination.

Based on the foregoing solution, a plurality of receive channels on an access side of the relay node may correspond to a plurality of receive beams, and directions of these access beams may be the same or different. After the foregoing steps are performed, signals of different receive beams are mapped to different frequency domain positions and then combined, so that a backhaul side may amplify received signals of a plurality of channels or beams on the access side by using a smaller quantity of channels or beams, and forward amplified signals to the network device. The network device equivalently implements parallel receiving of a plurality of beams of the relay node through frequency domain demapping.

Step 504: The relay node sends the combined one signal.

The network device may receive a signal on a second frequency and a third frequency. The one signal may be a signal obtained by combining a signal on the second frequency and a signal on the third frequency. It should be understood that on the second frequency and the third frequency may be different, and at least one frequency of the second frequency and the third frequency is different from the first frequency. The first frequency is a frequency on which the network device schedules the terminal device to send a signal. The network device may jointly receive signals on the second frequency and the third frequency. For example, the network device may estimate a channel of a signal on each of the second frequency and the third frequency, and perform maximum ratio combining (maximum ratio combining, MRC) based on an estimated value.

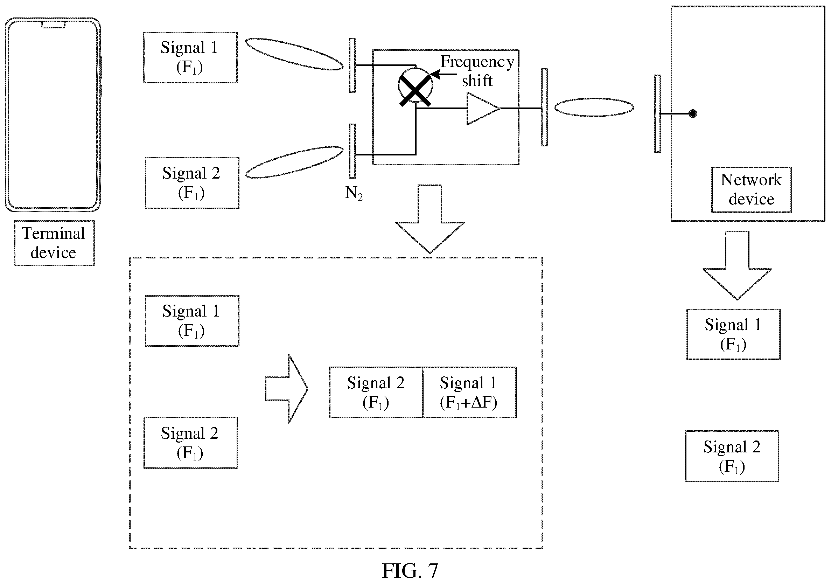

As shown in FIG. 7, it is assumed that the relay node has two access side receive channels and one backhaul side transmit channel. FIG. 7 shows a specific uplink forwarding manner. It is assumed that the terminal device sends an uplink signal on the first frequency, and the relay node may receive the uplink signal on the first frequency. The relay node receives two uplink signals. The relay node shifts a frequency of an uplink signal of one of receive channels to the second frequency, and combines a frequency-shifted uplink signal with the uplink signal received by a receive channel without performing frequency shift. A frequency of the uplink signal without performing frequency shift is the first frequency. In this case, it may be understood that the third frequency is the same as the first frequency. As shown in FIG. 7, the relay node shifts a frequency of an uplink signal received by a receive channel N2 to F2, and combines a frequency-shifted uplink signal with an uplink signal received by a receive channel 1. After the uplink signal is forwarded by the relay node, the network device may separately obtain, on different frequency bands, an uplink signal received by the relay device on each receive channel, so that the network device may perform combination receiving. As shown in FIG. 7, the network device may receive uplink signals on the first frequency and the second frequency, and the network device may jointly receive an uplink signal on the first frequency/third frequency and an uplink signal on the second frequency. For example, the network device may estimate a channel of an uplink signal on each of the first frequency and the second frequency, and perform combination such as maximum ratio combining (maximum ratio combining, MRC) on the uplink signal based on an estimated value.

Based on the foregoing solution, frequency shift mapping is performed on the received signal, to implement parallel receiving of the plurality of beams of the relay node. Parallel receiving of the plurality of beams enables the relay node to implement large angle coverage at one moment, and obtain a sufficient beam gain, to significantly improve a coverage gain of uplink forwarding of the relay node.

The following describes a beam mapping relationship of a relay node with reference to the accompanying drawings.

It is assumed that an access side array of a relay device includes N subarrays. Each subarray includes several array elements. Each subarray corresponds to one or two receive channels, and may form one or two analog beams. When each subarray corresponds to two receive channels, each receive channel may correspond to one antenna polarization direction. Optionally, analog beam directions used by the two receive channels corresponding to two polarization directions are the same.

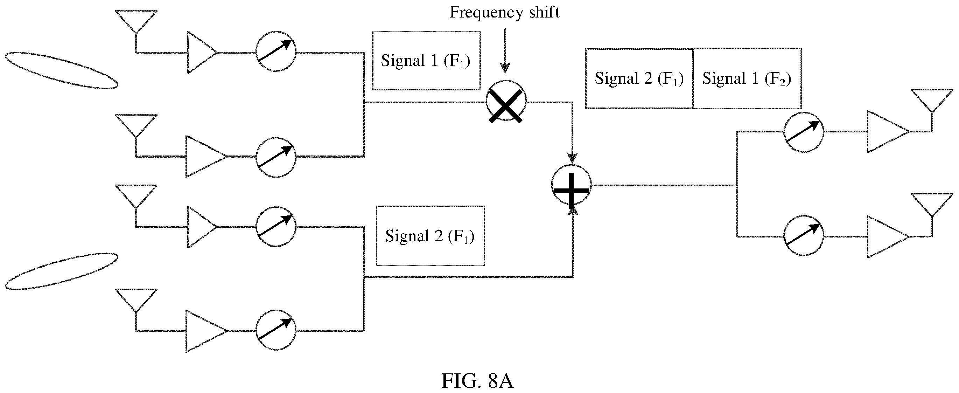

As shown in FIG. 8A, a case in which each subarray corresponds to a single receive channel is considered. In FIG. 8A, each subarray includes several antenna array elements, and a received signal of each antenna array element is phase-shifted, and then signals are combined into a received signal of a receive channel. In FIG. 8A, both a received signal of a first receive channel and a received signal of a second receive channel are located on a first frequency band F1, and then the relay node shifts a frequency of the received signal of the first receive channel to a second frequency band F2. Finally, the relay node combines the received signals of the first channel and the second channel, and a combined signal is sent by using a backhaul antenna panel. Optionally, the relay node may perform parallel polarization amplification or polarization frequency division amplification on the received signal. These are separately described in the following.

It should be noted that, a radio frequency/microwave practitioner should know that a receive channel is a physical channel on which a signal is received from space through an antenna and is performed amplification, filtering, and frequency mixing on, and a transmit channel is a physical channel on which a signal is performed amplification, filtering, and frequency mixing on, and then radiated to space through an antenna. Processing such as amplification, filtering, and frequency mixing is implemented by components such as an amplifier, a filter, and a frequency mixer in an analog/radio frequency circuit. In an implementation of a phased array shown in FIG. 1B, each antenna unit may correspond to one phase shifter, to form one beam, or each antenna unit may correspond to a plurality of phase shifters, to form a plurality of beams.

Parallel polarization amplification:

Specifically, a different frequency shift may be performed on a receive channel corresponding to each subarray. Specifically, the relay node has N frequency shift amounts:

$$\{ \varDelta F_0, \varDelta F_1, \dots, \varDelta F_{N-1} \}$$

Optionally, the frequency shift amounts are different, that is, frequencies of received signals of the N subarrays are shifted to N frequencies. Optionally, in the N frequency shift amounts, $F_n = 0$, that is, a signal corresponding to one subarray does not perform frequency shift. A received signal received by a $k^{th}$ receive channel of an $n^{th}$ subarray is $s_k^n(t)$, where k = 0 or k = 0,1. A frequency-shifted signal may be $x_k^n(t) = s_k^n(t) d^n(t)$.

Frequency-shifted signals of receive channels of the N subarrays are combined, to obtain combined K signals:

$$z_k(t) = \sum_n x_k^n(t)$$

A combined signal is amplified and then sent by a backhaul link.

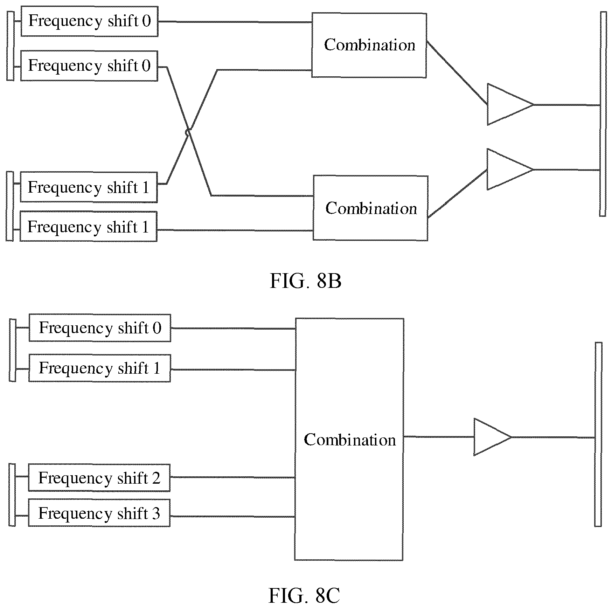

In a parallel polarization amplification method, signals received by two polarized channels of each subarray are mapped to a same frequency domain position, and are sent by two transmit channels of a backhaul antenna. If N is 2, an amplification model of the parallel polarization amplification method is shown in FIG. 8B.

As shown in FIG. 8B, the access side of the relay device includes two subarrays, and the two subarrays are referred to as a first access subarray and a second access subarray in the following. Each access subarray corresponds to two polarized channels, and the two polarized channels are respectively referred to as a first polarized channel and a second polarized channel. A signal received by the first polarized channel of the first access subarray and a signal received by the first polarized channel of the second access subarray are combined after different frequency shift, and then combined signal is mapped to a first polarized channel of a backhaul antenna panel for amplification and forwarding. A signal received by the second polarized channel of the first access subarray and a signal received by the second polarized channel of the second access subarray are combined after different frequency shift, and then combined signal is mapped to a second polarized channel of the backhaul antenna panel for amplification and forwarding.

Alternatively, the access side may perform frequency shift and combination on signals of receive channels of different subarrays, and then map combined signals to the two polarized channels of the backhaul antenna. As shown in FIG. 8B, the access side of the relay device includes four subarrays, and the four subarrays are referred to as a first access subarray, a second access subarray, a third access subarray, and a fourth access subarray in the following. Each access subarray corresponds to one polarized channel. A signal received by a receive channel of the first access subarray and a signal received by a receive channel of the third access subarray are combined after different frequency shift, and then a combined signal is mapped to the first polarized channel of the backhaul antenna panel for amplification and forwarding. A signal received by a receive channel of the second access subarray and a signal received by a receive channel of the fourth access subarray are combined after different frequency shift, and then a combined signal is mapped to the second polarized channel of the backhaul antenna panel for amplification and forwarding.

It should be noted that FIG. 8B shows only cases in which there are two access subarrays and four access subarrays. A person skilled in the art may perform, according to the foregoing method, frequency shift, combination, amplification, and forwarding on a signal received by the relay node having more access subarrays.

Polarization frequency division amplification:

Each (polarized) transmit channel and receive channel of each subarray may perform different frequency shift. Specifically, the relay node has 2N frequency shift values:

$$\{ \varDelta F_0^0, \varDelta F_1^0, \dots, \varDelta F_{N-1}^0, \varDelta F_0^0, \varDelta F_1^1, \dots, \varDelta F_{N-1}^1 \}$$

Optionally, the frequency shift values are different, that is, frequencies of 2N received signals of the N subarrays are shifted to 2N frequencies. Optionally, in the foregoing 2N frequency shift amounts, $\Delta F_n^k = 0$, that is, a signal received by a channel does not perform frequency shift. A received signal of a $k^{th}$ channel of an $n^{th}$ subarray is $s_k^n(t)$, where $k = 0,1$. A frequency-shifted signal is $x_k^n(t) = s_k^n(t)d_k^n(t)$.

Frequency-shifted signals of channels of the N subarrays are combined, to obtain combined K signals:

$$z(t) = \sum_{n,k} x_k^n(t)$$

A combined signal is amplified and then sent by a backhaul link.

FIG. 8C is a schematic diagram of a polarization frequency division amplification method. The access side of the relay device includes two subarrays, and the two subarrays are referred to as a first access subarray and a second access subarray in the following. Each access subarray corresponds to two polarized channels, and the two polarized channels are respectively referred to as a first polarized channel and a second polarized channel. A signal received by the first polarized channel of the first access subarray, a signal received by the second polarized channel of the first access subarray, a signal received by the first polarized channel of the second access subarray, and a signal received by the second polarized channel of the second access subarray are combined after different frequency shift, and then a combined signal is mapped to a polarized channel of a backhaul antenna panel for amplification and forwarding.

Alternatively, the access side may perform frequency shift and combination on signals of receive channels of different subarrays, and then map combined signals to two polarized channels of the backhaul antenna. As shown in FIG. 8C, the access side of the relay device includes four access subarrays, and the four subarrays are referred to as a first access subarray, a second access subarray, a third access subarray, and a fourth access subarray in the following. Each access subarray corresponds to one polarized channel. A signal received by a receive channel of the first access subarray, a signal received by a receive channel of the second access subarray, a signal received by a receive channel of the third access subarray, and a signal received by a receive channel of the fourth access subarray are combined after different frequency shift, and then a combined signal is mapped to a polarized channel of the backhaul antenna panel for amplification and forwarding.

It should be noted that FIG. 8C shows only cases in which there are two access subarrays and four access subarrays. A person skilled in the art may perform, according to the foregoing method, frequency shift, combination, amplification, and forwarding on a signal received by the relay node having more access subarrays.

In the method shown in FIG. 8A, each receive channel on the access side is connected to a different array element set, that is, one array element of an access antenna array plane corresponds to only a receive channel.

In another possible implementation, one array element of the access antenna array plane may correspond to a plurality of receive channels. For example, when a single-polarized receive antenna is used, all array elements of an antenna array plane may be connected to M receive channels, and each receive channel may correspond to different weighted combination of a connected antenna array element, that is, correspond to different beams. Then, the relay node performs frequency shift, combination, and amplification on signals received by different receive channels.

It is assumed that the access side array of the relay device includes N subarrays. Each subarray corresponds to one channel and may form one analog beam. When each subarray corresponds to one channel, each channel may correspond to a plurality of antenna polarization directions.

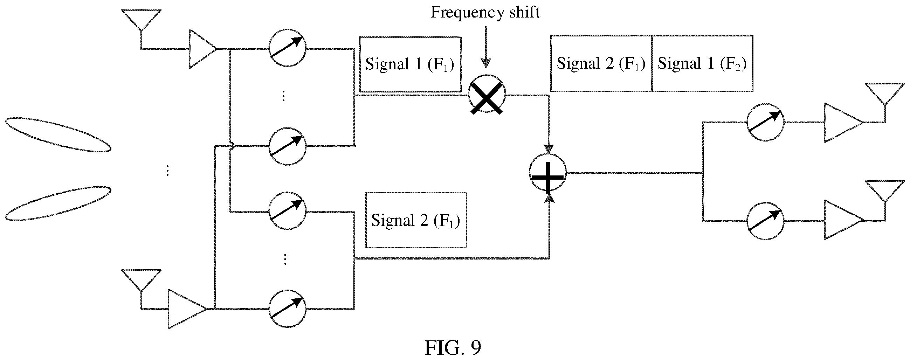

As shown in FIG. 9, each access antenna may correspond to different polarization directions. In FIG. 9, a case in which each access antenna corresponds to two polarization directions is considered. As shown in FIG. 9, received signals received by receive channels in a same polarization direction in each access antenna are phase-shifted and then combined into one received signal. In FIG. 9, a received signal of a first receive channel to a received signal of a fourth receive channel are all located on a first frequency band F1, and then a relay node shifts a frequency of the received signal of the first receive channel and a frequency of the received signal of the fourth receive channel to a second frequency band F2. Finally, the relay node combines the two received signals, and a combined signal is sent by using a backhaul antenna panel.

Optionally, the relay node may perform parallel polarization amplification or polarization frequency division amplification on the received signal. For details, refer to related descriptions of the parallel polarization amplification and polarization frequency division amplification. Details are not described herein again.

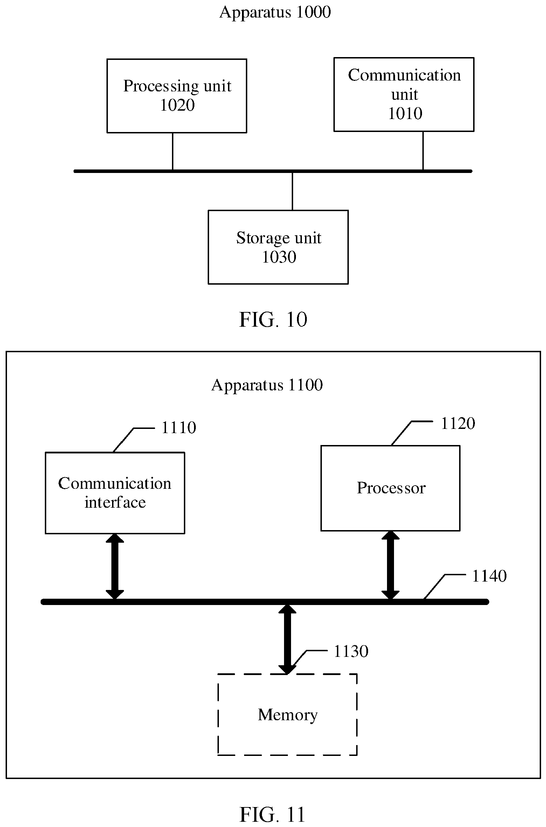

Based on the same technical idea as the foregoing communication method, as shown in FIG. 10, an apparatus 1000 is provided. The apparatus 1000 can perform the steps performed on the relay node side and/or the network device side in the method. To avoid repetition, details are not described herein again.

The apparatus 1000 includes a communication unit 1010 and a processing unit 1020, and optionally, further includes a storage unit 1030. The processing unit 1020 may be separately connected to the storage unit 1030 and the communication unit 1010, or the storage unit 1030 may be connected to the communication unit 1010. The processing unit 1020 may be integrated with the storage unit 1030. The communication unit 1010 may also be referred to as a transceiver, a transceiver machine, a transceiver apparatus, or the like. The processing unit 1020 may also be referred to as a processor, a processing board, a processing module, a processing apparatus, or the like. Optionally, a component that is in the communication unit 1010 and that is configured to implement a receiving function may be considered as a receiving unit, and a component that is in the communication unit 1010 and that is configured to implement a sending function may be considered as a sending unit. In other words, the communication unit 1010 includes the receiving unit and the sending unit. The communication unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

It should be understood that the communication unit 1010 is configured to perform the sending and receiving operations on the relay node side and the network device side in the foregoing method embodiments, and the processing unit 1020 is configured to perform an operation other than the sending and receiving operations on the relay node side and the network device side in the foregoing method embodiments. For example, in an implementation, the communication unit 1010 is configured to perform the receiving and sending operations on the relay node side and the network device side in the step 504 in FIG. 5, and/or the communication unit 1010 is further configured to perform other receiving and sending steps on the relay node side and the network device side in embodiments of this application. The processing unit 1020 is configured to perform the processing operations that are used to perform the steps in FIG. 5 in the step 502 and step 504 in FIG. 5, and/or the processing unit 1020 is further configured to perform another processing operation on the relay node side and the network device side in embodiments of this application.

The storage unit 1030 is configured to store a computer program.

For example, when the apparatus 1000 performs the steps performed by the relay node in the foregoing method, the processing unit 1020 is configured to combine N signals into one signal, where the N signals correspond to N receive channels, each signal is a signal obtained by performing frequency shift on a signal received by a receive channel corresponding to each signal, or each signal is a signal obtained without performing frequency shift on a signal received by a receive channel corresponding to each signal, and at least one signal included in the N signals is a signal obtained by performing frequency shift on a signal received by a receive channel corresponding to the at least one signal, where N is greater than or equal to 2; and the communication unit 1010 is configured to send the combined one signal. For the receive channel, signal, frequency shift processing, and the like, refer to related descriptions in the method embodiment shown in FIG. 5. Details are not described herein again.

In a design, the communication unit 1010 is further configured to receive one or more pieces of first indication information from the network device. For the first indication information, refer to related descriptions in the method embodiment shown in FIG. 5. Details are not described herein again.

In a design, the communication unit 1010 is further configured to receive N frequency shift modes from the network device. For the frequency shift modes, refer to related descriptions in the method embodiment shown in FIG. 5. Details are not described herein again.

In a design, the communication unit 1010 is further configured to receive one or more pieces of second indication information from the network device. When combining the N signals into one signal, the processing unit 1020 is specifically configured to combine the N signals into one signal. For the second indication information, refer to related descriptions in the method embodiment shown in FIG. 5. Details are not described herein again.

In a design, the communication unit 1010 is further configured to send a quantity of receive channels, the quantity of transmit channels, and a maximum quantity of supported frequencies to the network device. For the quantity of receive channels, the quantity of transmit channels, and the maximum quantity of supported frequencies, refer to related descriptions in the method embodiment shown in FIG. 5. Details are not described herein again.

In a design, the communication unit 1010 is further configured to send a supported mapping relationship between a receive channel and a transmit channel to the network device. For the supported mapping relationship between the receive channel and a transmit channel, refer to related descriptions in the method embodiment shown in FIG. 5. Details are not described herein again.

In a design, the processing unit 1020 is further configured to amplify the N signals, or amplify the one signal.

When the apparatus is a chip apparatus or circuit, the apparatus may include the communication unit 1010 and the processing unit 1020. The communication unit 1010 may be an input/output circuit and/or a communication interface. The processing unit 1020 is an integrated processor, a microprocessor, or an integrated circuit. The communication unit 1010 may input data and output data, and the processing unit 1020 may determine the output data based on the input data. For example, the communication unit 1010 may input N signals. The processing unit 1020 may determine the output data, for example, one combined signal, based on the input data. The communication unit 1010 may output data, for example, the combined one signal.

For example, when the apparatus 1000 performs the steps performed by the relay node in the foregoing method, the communication unit 1010 is configured to send first information, where the first information includes a parameter that indicates a terminal device to send a signal on a first frequency; the communication unit 1010 is further configured to receive signals on a second frequency and a third frequency based on the parameter; and the processing unit 1020 is configured to combine the signals received on the second frequency and the third frequency. For the first frequency, the second frequency, the third frequency, and the signal, refer to related descriptions in the method embodiment shown in FIG. 5. Details are not described herein again.

In a design, the communication unit 1010 is further configured to send one or more pieces of first indication information. For the first indication information, refer to related descriptions in the method embodiment shown in FIG. 5. Details are not described herein again.

In a design, the communication unit 1010 is further configured to send N frequency shift modes. For the frequency shift modes, refer to related descriptions in the method embodiment shown in FIG. 5. Details are not described herein again.

In a design, the communication unit 1010 is further configured to send one or more pieces of second indication information. For the second indication information, refer to related descriptions in the method embodiment shown in FIG. 5. Details are not described herein again.

In a design, the communication unit 1010 is further configured to receive a quantity of receive channels, a quantity of transmit channels, and a maximum quantity of supported frequencies from the relay node. For the quantity of receive channels, the quantity of transmit channels, and the maximum quantity of supported frequencies, refer to related descriptions in the method embodiment shown in FIG. 5. Details are not described herein again.

In a design, the communication unit 1010 is further configured to receive a supported mapping relationship between a receive channel and a transmit channel from the relay node. For the supported mapping relationship between the receive channel and the transmit channel, refer to related descriptions in the method embodiment shown in FIG. 5. Details are not described herein again.

When the apparatus is a chip apparatus or circuit, the apparatus may include the communication unit 1010 and the processing unit 1020. The communication unit 1010 may be an input/output circuit and/or a communication interface. The processing unit 1020 is an integrated processor, a microprocessor, or an integrated circuit. The communication unit 1010 may input data and output data, and the processing unit 1020 may determine the output data based on the input data. For example, the communication unit 1010 may output the first information and an input signal. The processing unit 1020 may combine signals based on the input signals.

FIG. 11 shows an apparatus 1100 according to an embodiment of this application. The apparatus 1100 is configured to implement the function of the relay node side and/or the network device side in the foregoing method. When the apparatus is configured to implement the function of the relay node side in the foregoing method, the apparatus may be a relay node, or may be a chip with a similar function of the relay node, or may be an apparatus that can be used in matching with the relay node. When the apparatus is configured to implement the function of the network device in the foregoing method, the apparatus may be a network device, a chip with a similar function of the network device, or an apparatus that can be used in matching with the network device.

The apparatus 1100 includes at least one processor 1120, configured to implement the function of the relay node side and/or the network device side in the method provided in embodiments of this application. The apparatus 1100 may further include a communication interface 1110. In this embodiment of this application, the communication interface may be a transceiver, a circuit, a bus, a module, or a communication interface of another type, and is configured to communicate with another device by using a transmission medium. For example, the communication interface 1110 is used by an apparatus in the apparatus 1100 to communicate with the another device. The processor 1120 may complete the function of the processing unit 1020 shown in FIG. 10, and the communication interface 1110 may complete the function of the communication unit 1010 shown in FIG. 10.

The apparatus 1100 may further include at least one memory 1130, configured to store program instructions and/or data. The memory 1130 is coupled to the processor 1120. The coupling in this embodiment of this application may be an indirect coupling or a communication connection between apparatuses, units, or modules in an electrical form, a mechanical form, or another form, and is used for information exchange between the apparatuses, the units, or the modules. The processor 1120 may operate in cooperation with the memory 1130. The processor 1120 may execute the program instructions stored in the memory 1130. At least one of the at least one memory may be included in the processor.

A specific connection medium between the communication interface 1110, the processor 1120, and the memory 1130 is not limited in this embodiment of this application. In this embodiment of this application, the memory 1130, the processor 1120, and the communication interface 1110 are connected to each other by using a bus 1140 in FIG. 11. The bus is represented by using a thick line in FIG. 11. This is merely an example for description, and is not used as a limitation. Another component connection manner may be alternatively used. The bus may be classified into an address bus, a data bus, a control bus, and the like. For ease of representation, only one bold line is used to represent the bus in FIG. 11, but this does not mean that there is only one bus or only one type of bus.

In another form of this embodiment, a computer-readable storage medium is provided, where the computer-readable storage medium stores instructions. When the instructions are executed, the method on the relay node side and/or the network device side in the foregoing method embodiments is performed.

In another form of this embodiment, a computer program product including instructions is provided. When the instructions are executed by an electronic apparatus (for example, a computer, a processor, or an apparatus installed with a processor), the electronic apparatus is enabled to perform the method on the relay node side and/or the network device side in the foregoing method embodiments.

In another form of this embodiment, a communication system is provided. The system may include at least one network device and at least one relay node.

It should be understood that the processor mentioned in embodiments of the present invention may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a discrete gate or transistor logic device, a discrete hardware component, or the like. The general-purpose processor may be a microprocessor, or the processor may be any conventional processor or the like.

It may be understood that the memory mentioned in embodiments of the present invention may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative descriptions, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general purpose processor, a DSP, an ASIC, an FPGA or another programmable logic device, a discrete gate, a transistor logic device, or a discrete hardware component, the memory (a storage module) is integrated into the processor.

It should be noted that the memory described in this specification aims to include but is not limited to these memories and any memory of another proper type.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of the present invention.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist independently physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A signal forwarding method, comprising:

   combining, by a relay node, N signals into one signal, wherein the N signals correspond to N receive channels, each signal is a signal obtained by performing frequency shift on a signal received by a receive channel corresponding to each signal, or each signal is a signal obtained without performing frequency shift on a signal received by a receive channel corresponding to each signal, and at least one signal comprised in the N signals is a signal obtained by performing frequency shift on a signal received by a receive channel corresponding to the at least one signal, wherein N is greater than or equal to 2; and
   sending, by the relay node, the combined one signal.

2. The method according to claim 1, wherein at least two signals in the N signals have different frequency shift amounts.

3. The method according to claim 1 or 2, wherein a frequency shift amount corresponding to each receive channel in the N receive channels varies, and a frequency shift amount of a signal received by one receive channel remains unchanged; and the at least one signal is a signal obtained by performing, based on a frequency shift amount corresponding to the receive channel corresponding to the at least one signal, frequency shift on the signal received by the receive channel corresponding to the at least one signal.

4. The method according to claim 1 or 2, wherein the N signals come from N groups, and each group comprises K signals, wherein K is greater than or equal to 1; the N groups are obtained by grouping a plurality of signals received by the N receive channels; and each signal in the N signals is a signal obtained by performing frequency shift on each signal in the plurality of signals, or each signal in the N signals is one of the plurality of signals.

5. The method according to claim 4, wherein K is a quantity of transmit channels of the relay node.

6. The method according to claim 4 or 5, wherein different groups in the N groups correspond to different frequency shift amounts, and signals in one group have a same frequency shift amount.

7. The method according to any one of claims 1 to 6, further comprising:
   receiving, by the relay node, one or more pieces of first indication information from a network device, wherein one piece of first indication information indicates a frequency domain position to which a signal corresponding to one receive channel of the relay node is mapped, and a frequency domain position of a frequency-shifted signal is determined based on the first indication information.

8. The method according to claim 1, further comprising:
   receiving, by the relay node, N frequency shift modes from a network device, wherein one frequency shift mode corresponds to one receive channel, one frequency shift mode indicates one frequency shift value, and the at least one signal is a signal obtained by performing, based on a frequency shift value indicated by a frequency shift mode corresponding to the receive channel corresponding to the at least one signal, frequency shift on the signal received by the receive channel corresponding to the at least one signal.

9. The method according to claim 8, further comprising:

   receiving, by the relay node, one or more pieces of second indication information from the network device, wherein one piece of first indication information indicates a transmit channel to which a signal corresponding to one receive channel of the relay node is mapped; and

the combining, by a relay node, N signals into one signal comprises:

mapping, by the relay node, the N signals to one transmit channel based on second indication information respectively corresponding to the N signals.

10. The method according to any one of claims 1 to 9, further comprising:
sending, by the relay node, a quantity of receive channels, the quantity of transmit channels, and a maximum quantity of supported frequencies to the network device.

11. The method according to any one of claims 1 to 10, further comprising:
sending, by the relay node, a supported mapping relationship between a receive channel and a transmit channel to the network device.

12. The method according to any one of claims 1 to 11, further comprising:

amplifying, by the relay node, the N signals; or amplifying, by the relay node, the one signal.

13. A signal forwarding method, comprising:

sending, by a network device, first information, wherein the first information comprises a parameter that indicates a terminal device to send a signal on a first frequency;
receiving, by the network device, signals on a second frequency and a third frequency based on the parameter, wherein the second frequency and the third frequency are different, and at least one of the second frequency and the third frequency is different from the first frequency; and
combining, by the network device, the signals received on the second frequency and the third frequency.

14. The method according to claim 13, further comprising:
sending, by the network device, one or more pieces of first indication information, wherein one piece of first indication information indicates a frequency domain position to which a signal corresponding to one receive channel of a relay node is mapped, and the frequency domain position is a frequency domain position on one frequency of the second frequency and the third frequency.

15. The method according to claim 13, further comprising:
sending, by the network device, N frequency shift modes, wherein one frequency shift mode corresponds to one receive channel of a relay node, one frequency shift mode indicates one frequency shift value, and the frequency shift value is a frequency shift value of shifting the first frequency to the second frequency, or the frequency shift value is a frequency shift value of shifting the first frequency to the third frequency.

16. The method according to claim 15, further comprising:
sending, by the network device, one or more pieces of second indication information, wherein one piece of first indication information indicates a transmit channel to which a signal corresponding to one receive channel of the relay node is mapped.

17. The method according to any one of claims 13 to 16, further comprising:
receiving, by the network device, a quantity of receive channels, a quantity of transmit channels, and a maximum quantity of supported frequencies from the relay node.

18. The method according to any one of claims 13 to 17, further comprising:
receiving, by the network device, a supported mapping relationship between a receive channel and a transmit channel from the relay node.

19. The method according to any one of claims 13 to 18, wherein the received signal is an amplified signal.

20. A signal forwarding apparatus, comprising a processing unit and a communication unit, wherein

the processing unit is configured to combine N signals into one signal, wherein the N signals correspond to N receive channels, each signal is a signal obtained by performing frequency shift on a signal received by a receive channel corresponding to each signal, or each signal is a signal obtained without performing frequency shift on a signal received by a receive channel corresponding to each signal, and at least one signal comprised in the N signals is a signal obtained by performing frequency shift on a signal received by a receive channel corresponding to the at least one signal, wherein N is greater than or equal to 2; and
the communication unit is configured to send the combined one signal.

21. The apparatus according to claim 20, wherein at least two signals in the N signals have different frequency shift amounts.

22. The apparatus according to claim 20 or 21, wherein a frequency shift amount corresponding to each receive channel in the N receive channels varies, and a frequency shift amount of a signal received by one receive channel remains unchanged; and the at least one signal is a signal obtained by performing, based on a frequency shift amount corresponding to the receive channel corresponding to the at least one signal, frequency shift on the signal received by the receive channel corresponding to the at least one signal.

23. The apparatus according to claim 20 or 21, wherein the N signals come from N groups, and each group comprises K signals, wherein K is greater than or equal to 1; the N groups are obtained by grouping a plurality of signals received by the N receive channels; and each signal in the N signals is a signal obtained by performing frequency shift on each signal in the plurality of signals, or each signal in the N signals is one of the plurality of signals.

24. The apparatus according to claim 23, wherein different groups in the N groups correspond to different frequency shift amounts, and signals in one group have a same frequency shift amount.

25. The apparatus according to claim 23 or 24, wherein different groups in the N groups correspond to different frequency shift amounts, and signals in one group have a same frequency shift amount.

26. The apparatus according to any one of claims 20 to 25, wherein the communication unit is further configured to:
receive one or more pieces of first indication information from a network device, wherein one piece of first indication information indicates a frequency domain position to which a signal corresponding to one receive channel of the apparatus is mapped, and a frequency domain position of a frequency-shifted signal is determined based on the first indication information.

27. The apparatus according to claim 20, wherein the communication unit is further configured to:
receive N frequency shift modes from a network device, wherein one frequency shift mode corresponds to one receive channel, one frequency shift mode indicates one frequency shift value, and the at least one signal is a signal obtained by performing, based on a frequency shift value indicated by a frequency shift mode corresponding to the receive channel corresponding to the at least one signal, frequency shift on the signal received by the receive channel corresponding to the at least one signal.

28. The apparatus according to claim 27, wherein the communication unit is further configured to:

receive one or more pieces of second indication information from the network device, wherein one piece of first indication information indicates a transmit channel to which a signal corresponding to one receive channel of the apparatus is mapped; and
when combining the N signals into the one signal, the processing unit is specifically configured to:
combine the N signals into the one signal.

29. The apparatus according to any one of claims 20 to 28, wherein the communication unit is further configured to:
send a quantity of receive channels, the quantity of transmit channels, and a maximum quantity of supported frequencies to the network device.

30. The apparatus according to any one of claims 20 to 29, wherein the communication unit is further configured to:
send a supported mapping relationship between a receive channel and a transmit channel to the network device.

31. The apparatus according to any one of claims 20 to 30, wherein the processing unit is further configured to:

amplify the N signals; or
amplify the one signal.

32. A signal forwarding apparatus, comprising a processing unit and a communication unit, wherein

the communication unit is configured to send first information, wherein the first information comprises a parameter that indicates a terminal device to send a signal on a first frequency;
the communication unit is further configured to receive signals on a second frequency and a third frequency based on the parameter, the second frequency and the third frequency are different, and at least one of the second frequency and the third frequency is different from the first frequency; and
the processing unit is configured to combine the signals received on the second frequency and the third frequency.

33. The apparatus according to claim 32, wherein the communication unit is further configured to:
send one or more pieces of first indication information, wherein one piece of first indication information indicates a frequency domain position to which a signal corresponding to one receive channel of a relay node is mapped, and the frequency domain position is a frequency domain position on one frequency of the second frequency and the third frequency.

34. The apparatus according to claim 32, wherein the communication unit is further configured to:
send N frequency shift modes, wherein one frequency shift mode corresponds to one receive channel of a relay node, one frequency shift mode indicates one frequency shift value, and the frequency shift value is a frequency shift value of shifting the first frequency to the second frequency, or the frequency shift value is a frequency shift value of shifting the first frequency to the third frequency.

35. The apparatus according to claim 34, wherein the communication unit is further configured to:
send one or more pieces of second indication information, wherein one piece of second indication information indicates a transmit channel to which a signal corresponding to one receive channel of the relay node is mapped.

36. The apparatus according to any one of claims 32 to 35, wherein the communication unit is further configured to:
receive a quantity of receive channels, a quantity of transmit channels, and a maximum quantity of supported frequencies from the relay node.

37. The apparatus according to any one of claims 32 to 36, wherein the communication unit is further configured to:
receive a supported mapping relationship between a receive channel and a transmit channel from the relay node.

38. The apparatus according to any one of claims 32 to 37, wherein the received signal is an amplified signal.

39. A signal forwarding apparatus, comprising: a processor and a memory, wherein

the memory is configured to store a computer program or instructions; and
the processor is configured to execute the computer program or instructions stored in the memory, so that the method according to any one of claims 1 to 12 or the method according to any one of claims 13 to 19 is performed.

40. A computer-readable storage medium, wherein the computer-readable storage medium stores computer-executable instructions, and when the computer-executable instructions are invoked by a computer, the computer is enabled to perform the method according to any one of claims 1 to 12 or the method according to any one of claims 13 to 19.

Antenna 1                                           Antenna 2

Repeater

FIG. 1A

Network device

Relay node

Terminal device

Downlink amplification

Uplink amplification

FIG. 1B

Communication system 200

FIG. 2

Frequency shift

FIG. 3A

FIG. 3B

FIG. 4A

FIG. 4B

| Terminal device | Relay node | Network device |
|---|---|---|

501: First information

Signals

502: Receive N signals

503: Combine the N signals into one signal

504: Combined one signal

FIG. 5

FIG. 6A

FIG. 6B

FIG. 6C

EP 4 304 102 A1

FIG. 7

Signal 2 (F₁) | Signal 1 (F₂)

Frequency shift

Signal 1 (F₁)

Signal 2 (F₁)

FIG. 8A

FIG. 8B

FIG. 8C

FIG. 9

Apparatus 1000

Processing unit
1020

Communication
unit
1010

Storage unit
1030

FIG. 10

Apparatus 1100

1110

Communication
interface

1120

Processor

1140

1130

Memory

FIG. 11

<div style="text-align:center">**INTERNATIONAL SEARCH REPORT**</div>

| | International application No. |
|---|---|
| | **PCT/CN2022/082574** |

### A. CLASSIFICATION OF SUBJECT MATTER

H04B 7/04(2017.01)i; H04B 7/14(2006.01)i; H04W 24/02(2009.01)i

According to International Patent Classification (IPC) or to both national classification and IPC

### B. FIELDS SEARCHED

Minimum documentation searched (classification system followed by classification symbols)

H04B H04W H04L

Documentation searched other than minimum documentation to the extent that such documents are included in the fields searched

Electronic data base consulted during the international search (name of data base and, where practicable, search terms used)

CNTXT; EPTXT; USTXT; CNKI; 3GPP; VEN; WOTXTCNABS: 信号, 发送, 合并, 接收, 通道, 移频, 节点, signal, transmit +, merge, receiv+, channel, requency-shifted

### C. DOCUMENTS CONSIDERED TO BE RELEVANT

| Category* | Citation of document, with indication, where appropriate, of the relevant passages | Relevant to claim No. |
|---|---|---|
| A | CN 103166687 A (XI'AN JIAOTONG UNIVERSITY) 19 June 2013 (2013-06-19) description, paragraphs [0024]-[0092], and figures 1-2 | 1-40 |
| A | CN 111757357 A (OPPO GUANGDONG MOBILE TELECOMMUNICATIONS CO., LTD.) 09 October 2020 (2020-10-09) entire document | 1-40 |
| A | CN 114007216 A (VIVO COMMUNICATION TECHNOLOGY CO., LTD.) 01 February 2022 (2022-02-01) entire document | 1-40 |
| A | US 2013242853 A1 (SEO, H. et al.) 19 September 2013 (2013-09-19) entire document | 1-40 |
| A | US 2014045541 A1 (GOLBA LLC) 13 February 2014 (2014-02-13) entire document | 1-40 |
| A | US 2017156069 A1 (GOLBA LLC) 01 June 2017 (2017-06-01) entire document | 1-40 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **24 April 2022** | **07 May 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
|---|
| **PCT/CN2022/082574** |

| Patent document cited in search report | | | Publication date (day/month/year) | Patent family member(s) | | | Publication date (day/month/year) |
|---|---|---|---|---|---|---|---|
| CN | 103166687 | A | 19 June 2013 | None | | | |
| CN | 111757357 | A | 09 October 2020 | None | | | |
| CN | 114007216 | A | 01 February 2022 | None | | | |
| US | 2013242853 | A1 | 19 September 2013 | EP | 2639975 | A2 | 18 September 2013 |
| | | | | KR | 20140005879 | A | 15 January 2014 |
| | | | | WO | 2012064079 | A2 | 18 May 2012 |
| US | 2014045541 | A1 | 13 February 2014 | US | 2017317734 | A1 | 02 November 2017 |
| | | | | US | 2014044043 | A1 | 13 February 2014 |
| | | | | US | 2014044041 | A1 | 13 February 2014 |
| | | | | US | 2014044042 | A1 | 13 February 2014 |
| | | | | US | 2019222292 | A1 | 18 July 2019 |
| | | | | US | 2017156069 | A1 | 01 June 2017 |
| | | | | US | 2019097713 | A1 | 28 March 2019 |
| | | | | US | 2016142114 | A1 | 19 May 2016 |
| | | | | US | 2019296820 | A1 | 26 September 2019 |
| | | | | US | 2018375564 | A1 | 27 December 2018 |
| | | | | US | 2014045478 | A1 | 13 February 2014 |
| | | | | US | 2018234158 | A1 | 16 August 2018 |
| | | | | US | 2016211905 | A1 | 21 July 2016 |
| US | 2017156069 | A1 | 01 June 2017 | US | 2017317734 | A1 | 02 November 2017 |
| | | | | US | 2014045541 | A1 | 13 February 2014 |
| | | | | US | 2014044043 | A1 | 13 February 2014 |
| | | | | US | 2014044041 | A1 | 13 February 2014 |
| | | | | US | 2014044042 | A1 | 13 February 2014 |
| | | | | US | 2019222292 | A1 | 18 July 2019 |
| | | | | US | 2019097713 | A1 | 28 March 2019 |
| | | | | US | 2016142114 | A1 | 19 May 2016 |
| | | | | US | 2019296820 | A1 | 26 September 2019 |
| | | | | US | 2018375564 | A1 | 27 December 2018 |
| | | | | US | 2014045478 | A1 | 13 February 2014 |
| | | | | US | 2018234158 | A1 | 16 August 2018 |
| | | | | US | 2016211905 | A1 | 21 July 2016 |

Form PCT/ISA/210 (patent family annex) (January 2015)

**REFERENCES CITED IN THE DESCRIPTION**

**Patent documents cited in the description**

- CN 202110363653